Europäisches Patentamt

European Patent Office

Office européen des brevets

(11) Publication number: **0 423 344 A1**

# EUROPEAN PATENT APPLICATION
## published in accordance with Art. 158(3) EPC

(21) Application number: 90900329.5

(22) Date of filing: 08.12.89

(86) International application number: PCT/JP89/01237

(87) International publication number: WO 90/06231 (14.06.90 90/14)

(51) Int. Cl.5: **B32B 27/00, H01M 10/40**

(30) Priority: 09.12.88 JP 310212/88

(43) Date of publication of application: 24.04.91 Bulletin 91/17

(84) Designated Contracting States: DE FR GB

(71) Applicant: KABUSHIKI KAISHA KOMATSU SEISAKUSHO
3-6, Akasaka 2-chome
Minato-ku Tokyo 107(JP)

(72) Inventor: ORITA, Minoru Tech.Inst. K.K. Komatsu Seisakusho
1200, Manda Hiratsuka-shi
Kanagawa-ken 254(JP)
Inventor: HIGO, Shinji
Tech.Inst. K.K. Komatsu Seisakusho 1200, Manda
Hiratsuka-shi Kanagawa-ken 254(JP)
Inventor: SUMITANI, Akira
Tech. Inst. K.K. Komatsu Seisakusho 1200, Manda
Hiratsuka-shi Kanagawa-ken 254(JP)

(74) Representative: TER MEER - MÜLLER - STEINMEISTER & PARTNER
Mauerkircherstrasse 45
W-8000 München 80(DE)

(54) ELECTRICALLY CONDUCTIVE PLASTIC COMPOSITE MEMBER AND PLASTIC CELL USING THE SAME.

(57) An object of this invention is to provide an electrically conductive plastic material having a high bulk density, a uniform density and a capability of being well impregnated by electrolyte, a method of producing the same, and a cell using the plastic material as an electrode active material. The electrically conductive plastic material comprises a polymer film of pyrroles synthesized by the electrolytic oxidative polymerization and a polymer film of aromatic amines synthesized and directly applied onto the above-mentioned polymer film by the electrolytic oxidative polymerization. The production method thereof comprises the step of synthesizing substituted and/or nonsubstituted pyrroles on the surface of the positive electrode by the electrolytic oxidative polymerization in the presence of a substituted and/or nonsubstituted aromatic sulfonic acide or a salt thereof, and the step of forming substituted and/or nonsubstituted aromatic amines by the electrolytic oxidative polymerization on the surface of the positive electrode in the presence of a substituted and/or nonsubstituted aromatic sulfonic acid or a salt thereof using the obtained pyrrole polymer as the positive electrode or as a part of the positive electrode.

# ELECTRICALLY CONDUCTIVE PLASTIC COMPOSITE MEMBER AND PLASTIC CELL USING THE SAME

Field of the Invention

This invention relates to an electrically conductive plastic composite member and a method for the production thereof and to a plastic cell using the electrically conductive plastic composite member as an electrode active substance.

Background of the Invention

As electrode active substances for plastic batteries, various electrically conductive plastics have been accepted as promising candidates and have been the subjects of study. On account of the cell performance, however, aromatic amine polymers and particularly polyanilines are believed to constitute the most potential materials. The methods available for the synthesis of such polyanilines are broadly divided into (A) methods of chemical synthesis and (B) methods of electrolytic oxidation polymerization. Of these methods, the methods of chemical. synthesis of (A) have been known long to the art [A. G. Green and A. E. Wood-head, "J. Chem. Soc.," 2388 (1910)]. This synthesis is effected, for example, by placing aniline in hydrochloric acid and adding ammonium persulfate thereto as an initiator. The polyaniline which is obtained by this method is in a powdery state. The methods of electrolytic oxidation polymerization of (B) resort to a basic procedure which comprises dissolving aniline in an aqueous protenic acid solution, immersing an electrically conductive glass electrode or a metallic electrode as a positive electrode in the resultant solution, and applying a DC voltage or current inducing deposition of a polymer on the positive electrode. Recently, particularly in due respect to the possibility of the polymer being deposited in a stratified form, the feasibility of the adoption of an electrochemically synthesized polyaniline as an has been studied [A.G. MacDiamid et al., "Mol. Cryst. Liq. Cryst., (1985), Vol 121, pp. 187 to 190]. The polyaniline which is synthesized by electrolytic oxidation polymerization, however, has a small bulk density, reaching 0.5 g/cm$^2$ at most and falling generally in the range of 0.1 to 0.4 g/cm$^2$. Moreover, when the synthesis is effected in a large area, the density is dispersed at the site of synthesis.

When the polyaniline of this quality is to be used in a cell as an electrode active substance (Hereinafter referred to as "polyaniline cell"), the polyaniline in a powdery form is compression molded in the form of a coil and the polyaniline in a membraneous form is compressed for the purpose of addition to bulk density prior to use.

When the polyaniline, no matter whether it may be in a powdery form or in a membraneous form, is subjected to application of pressure in the step of aftertreatment following the step of synthesis, it is allowed to acquire an increase in bulk density and, as a result, the polyaniline cell is allowed to attain compaction. In either of the two patterns of aftertreatment, the polyaniline batter has the disadvantage that an organic solvent type electrolyte of high density permeates the polyaniline web to the depth thereof only with difficulty and the electric current for recharging and discharging the cell cannot be increased appreciably.

This fact does not matter very much when the polyaniline cell is used as a feeble current type cell which is used as the backup for an IC memory. It matters greatly, however, when the polyaniline cell is used as a large-current type cell for an emergency lump or a power device. Particularly, it matters seriously when the polyaniline cell as a spiral cell which has opposed positive and negative electrodes wound up cylindrically for the purpose of taking out large electric current.

Summary of the Invention

This invention has been produced for the purpose of mending the state of prior art described above. The basic object of this invention, therefore, is to solve with a very simple method the drawbacks, small bulk density and dispersion of density, suffered by the aromatic amine polymers produced by electrolytic oxidation polymerization.

Another object of this invention is to produce, for the solution of the aforementioned problem due to the treatment of pressure application, an electrically conductive plastic material which has acquired high bulk density in the step of synthesis without requiring any external treatment such as application of pressure in the step of aftertreatment.

Still another object of this invention is to provide an electrically conductive palstic material which possesses a high bulk density and uniform density, excels in permeability to electrolyte, and proves to be useful as an electrode active substance for a plastic cell.

Yet another object of this invention is to provide a plastic cell which exhibits a high output density and high satisfactory boost chargeableness and excels in cell performance.

To accomplish the objects described above according to the present invention, there is provided an electrically conductive plastic composite member which comprises a polymer film of a pyrrole synthesized by electrolytic oxidation polymerization and a polymer film of an aromatic amine synthesized similarly by electrolytic oxidation polymerization as superposed directly on the aforementioned polymer film.

Further, according to this invention, there is provided a method for the production of an electrically conductive plastic composite member of the construction mentioned above, which method comprises a step of synthesizing a substituted and/or unsubstituted pyrrole by electrolytic oxidation polymerization on the surface of a positive electrode in the presence of a substituted and/or unsubstituted aromatic sulfonic acid or a salt thereof and a step of synthesizing a substituted and/or unsubstituted aromatic amine by electrolytic oxidation polymerization on the surface of the aforementioned polymer of pyrrole as a positive electrode or as part of a positive electrode in the presence of a substituted and/or unsubstituted aromatic sulfonic acid or a salt thereof. As the solvent for the synthesis of the polymer of pyrrole, water or a mixed solvent consisting of water and an organic solvent can be advantageously used. Further as the solvent for the synthesis of the polymer of aromatic amine, a mixed solvent consisting of water and an organic solvent is desirable.

According to the present invention, there is further provided plastic cell which uses as an electrode active substance an electrically conductive plastic composite member comprising a polymer film of a pyrrole synthesized by electrolytic oxidation polymerization and a polymer film of an aromatic amine synthesized similarly by electrolytic oxidation polymerization as superposed directly on the aforementioned polymer film.

Since the method of this invention constructed as described synthesizes the polymer film of aromatic amine by electrolytic oxidation polymerization as superposed directly on the polymer film of pyrrole synthesized by electrolytic oxidation polymerization, an electrically conductive plastic composite member which possesses a notably high density, suffers only slightly from the dispersion of film thickness (bulk density) liable to occur in a polymer film of large surface area, and proves to be ideal for an electrode material can be obtained relatively easily at a low cost.

The electrically conductive plastic composite member obtained as described above acquires a high bulk density in the step of synthesis and, unlike the conventional countertype which undergoes application of pressure in the step of aftertreatment, allows relatively easy ingression and engression of electric charge. The plastic cell which uses this electrically conductive plastic composite member as an electrode active substance, therefore, exhibits a high output density and highly satisfactory boost chargeableness.

The aforementioned and other objects, modes, and advantages of the present invention will become apparent to persons skilled in the art from the further disclosure of this invention to be made in the following detailed description of a preferred embodiment with reference to the acocmpanying drawings.

Brief Description of the Drawings

Fig. 1 is a scanning electron micrograph of the texture of a thin polyaniline film synthesized by electrolytic oxidation polymerization (in the state process of starting formation of a second fibrillar polyaniline layer on a first dense polyaniline layer).

Fig. 2 is a scanning electron micrograph of the texture of a thick polyaniline film (in the process of completing growth of the second fibrillar polyaniline layer).

Fig. 3A and Fig. 3B are scanning electron micrographs each of the shape of fibers on the liquid surface side of polypyrrole.

Fig. 4A and Fig. 4B are scanning electron micrographs each of the shape of fibers on the electrode side of polypyrrole.

Fig. 5A and Fig. 5B are scanning electron micrographs each of the shape of fibers of a polyaniline/polypyrrole composite obtained in Example 1.

Detailed Description of the Invention

This invention is applicable to the synthesis of polymers of substituted aromatic amines such as N-methyl aniline and N,N-dimethyl aniline. It will be described below with respect to the synthesis of polyaniline as a representative of such polymers.

Various problems of the nature described above arise when a polymer film has its bulk density increased by application of pressure in the step of aftertreatment. The present inventors, therefore, have taken a particular interest in the inclination of polyaniline to acquire high density. in the step of synthesis and have performed a diligent stydy on this point.

How smoothly the treatment for the electrically conductive plastic material to take in the ion (doping) and the treatment for the plastic material to release the previously introduced ion (de-doping) are carried out electrochemically equals how smoothly the battery is allowed to be charged and how large electric current to be taken out of the plastic cell. To realize the smoothness of the electrochemical treatments, it is necessary that the fibrillar texture owned by the polyaniline which has undergone no compression molding should be retained intact and the surface area of that texture should be utilized to advantage. The idea of synthesizing the polyaniline as superposed on a substrate of porous metal possessing a large specific surface area, therfore, seems to meet the purpose. This idea, however, entails the problem of softness and volume and the problem of cost. The present inventors have continued a study in search of a measure to take the place of this idea and consequently obtained a new knowledge that the synthesis of the polyaniline is safely attained on an electrically conductive polastic material possessing high electrically conductivity, offering sufficient flexibility, enjoying a low production cost, and excelling in film strength. The present invention has been perfected as the result.

The method of this invention for the formation of a plastic electrode comprises the following two steps.

First step: On a metallic foil such as a Ni foil which is used as a positive electrode, a thin film of the polymer of a substituted and/or unsubstituted pyrrole such as, for example, polyporrole is synthesized in the form of a coating by electrolytic oxidation polymerization.

Second step: On the Ni foil coated with the polypyrrole prepared in the first step and used as a positive electrode herein, polyaniline is synthesized by electrolytic oxidation polymerization and, at the same time, superposed as a coating on the pyrrole coating.

In consequence of these treatments, the polyaniline as an electrode active substance acquires a conspicuously increased density and betrays virtually no discernible dispersion of bulk density from one part to another.

The effects described above are understood to originate in the following phenomena.

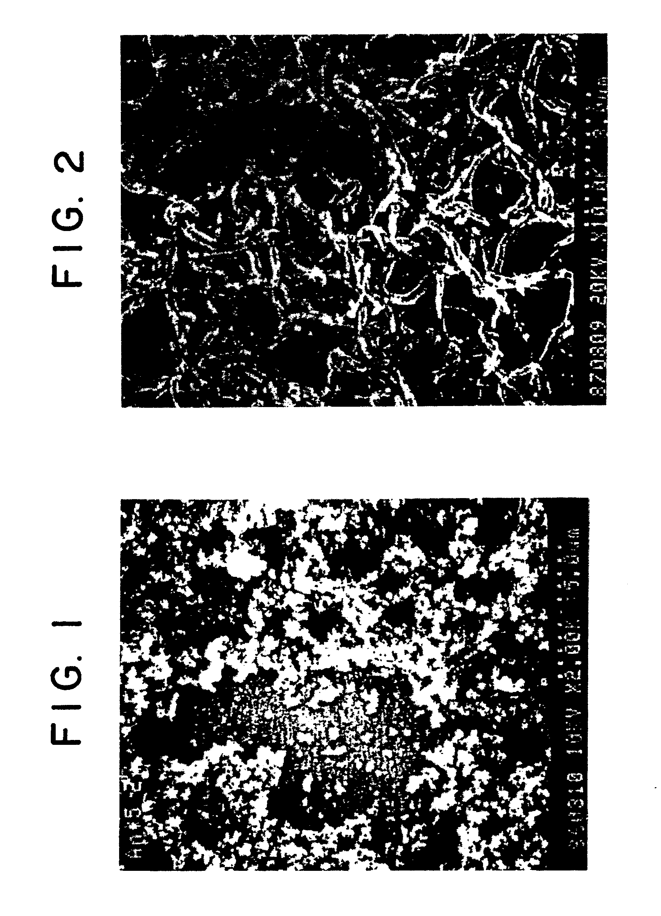

The polyaniline which synthesized by electrolytic oxidation polymerization in the step of synthesis on the surface of an electrode is a very dense and smooth film (Fig. 1). As the polymerization proceeds further, a very coarse fibrillar structure is grown on the film (Fig. 2). The ratio of the first layer of smooth texture and the fibrillar structure is variable with various factors such as the kind of electrode surface, the composition of the polymerization solution, the temperature, the voltage, the electric current, and the amount of electricity for polymerization. Generally, it is thought that the fibrillar structure alone gains in growth after the electrode surface is covered with the smooth polyaniline film. The polyaniline except for the part thereof on the film, therefore, forms a film of low bulk density. This bulk density gradually decreases in proportion as the amount of electricity for polymerizatin increases.

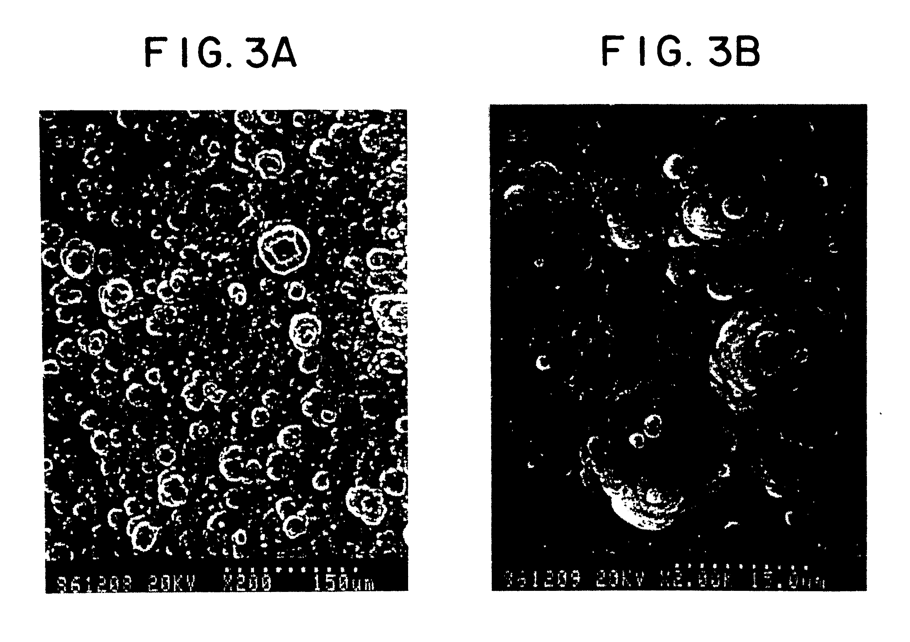

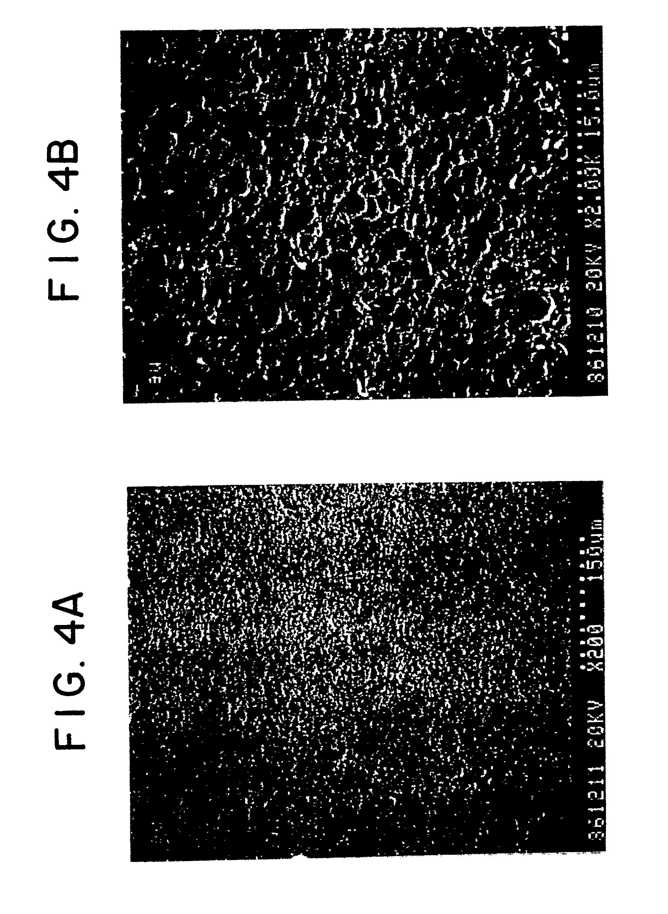

In contrast, polypyrrole and poly-3-methyl pyrrole each give a unform and smooth film (Fig. 3 and Fig. 4). Since the true density of the film is 2 to 1.2 times the bulk density of the same film. Even when the film is apparently smooth, it is considered to have a fairly porous inner texture.

When polyaniline is synthesized on polyryrrole or poly-3-methyl pyrrole, (1) the proportion of a dense and smooth film of polyaniline is increased by the same effect as achieved in increasing the surface area of an electrode (because the electrode surface is formed of porous polypyrrole or poly-3-methyl pyrrole) and (2) the polyaniline is synthesized in such a manner as to fill up the pores in the polypyrrole or poly-3-methyl pyrrole and, therefore, is allowed to acquire a higher bulk density than the polyaniline is synthesized on a specular metallic surface.

A plastic cell possessing a high output density and exhibiting highly satisfactory boost chargeableness is obtained by using as a positive electrode thereof the polyaniline/polypyrrole composite which is obtained as described above and then deposited fast on a suitable metallic collector or retained intact on a metallic foil used in the polymerization and to be diverted to a collector.

The protonic acids which are advantageously used for the aforementioned electrolytic oxidation polymerization include substituted and/or unsubstituted aromatic sulfonic acids such as p-toluenesulfonic acid and benzenesulfonic acid and sodium salts, potassium salts, and other similar salts of such acids, for example.

The organic solvents which are used advantageously for the synthesis include alcohols such as methanol, ethanol, propanol, butanol, ethylene glycol, propylene glycol, and glycerin and organic solvents of high polarity such as acetonitrile, for example.

[Examples]

Now, the present invention will be described specifically below with reference to working examples. Of course, this invention is not restricted by the following examples.

Example 1:

A Ni foil (4.5 cm x 20 cm) 10 $\mu$m in thickness was cleaned with ultrasonic waves in a hexane-acetone equivoluminal mixed solvent. Then, in an aqueous solution containing 1.0 mol of sodium p-toluenesulfonate and 0.25 mol of pyrrole each per liter, a film of polypyrrole was synthesized as deposited in the form of a coating (surface area of coating 4.5 cm x 18 cm and amount of electricity for polymerization 3 coulombs/cm$^2$) on the Ni foil. The coating layer thus formed was about 12 $\mu$m in thickness. Immediately after the polymerization of polypyrrole, the polypyrrole-coated Ni foil was immersed in purified water and washed to remove the polymer liquid adhering to the polypyrrole surface.

The polypyrrole-coated Ni foil consequently obtained was immersed in a water-methanol equivoluminal mixed solvent containing 1 mol of p-toluenesulfonic acid and 0.5 mol of aniline each per liter and polyaniline was synthesized by polymerization at a constant voltage of 1.2 V (surface area of polymerization 4.5 cm x 17.5 cm and amount of electricity for polymerization 20 coulombs/ cm$^2$). Immediately after the polymerization of polyaniline, the coated Ni foil was immersed in pure methanol to extract the polymer liquid from the polymer layer. The foil was transferred to fresh methanol several times until visible coloration of methanol ceased to occur. Then, the foil was dried a draft and vacuum dried with a vacuum line for 48 hours.

The polyaniline/polypyrrole composite film thus obtained had a thickness of 65 +2 $\mu$m and a bulk density of 0.78 g/cm$^2$.

A polyaniline cell was produced by using the polyaniline/polypyrrole-coated Ni foil as a positive electrode and a lithium foil (0.22 mm in thickness) as a negative electrode. In this cell, the Ni foil was utilized as a collector for the positive electrode.

The cell used as an electrolyte a solution containing LiBF$_4$ in a concentration of 5 mol/liter in propylene carbonate and as a separator a sheet of polypropylene undergone a treatment for impartation of hydrophilicity (marketed under trademark designation of "Duraguard #3400").

A charging-discharging cycle was repeated in the mode of charging the cell to 3.6 V at a charging current value of 0.1 mA/cm$^2$, allowing it one hour's standing at rest, and discharging it to 2.5 V at a discharging current value of 0.1 mA/cm$^2$c. The amount of stored charge increased to the fifth to sixth charging-discharging cycle and remained at a substantially constant level thereafter. The amount of stored charge which reached the constant level was 144 Ah/kg.

The procedure of charging this cell to 3.6V at the same charging current value of 3.6 V and discharging it at a varying current value was repeated to determined by calculation the maximum output density. The output density was maximized to produce a high output of 9.9 KW/kg when the discharge current value was about 1 A.

In the charging test performed in the mode of charging the battery at a varying value of voltage for a fixed period of 10 minutes, a discharging capacity of 94 mAh was obtained by the charging at 3.8 V. This magnitude exceeds 80% of the capacity of this cell.

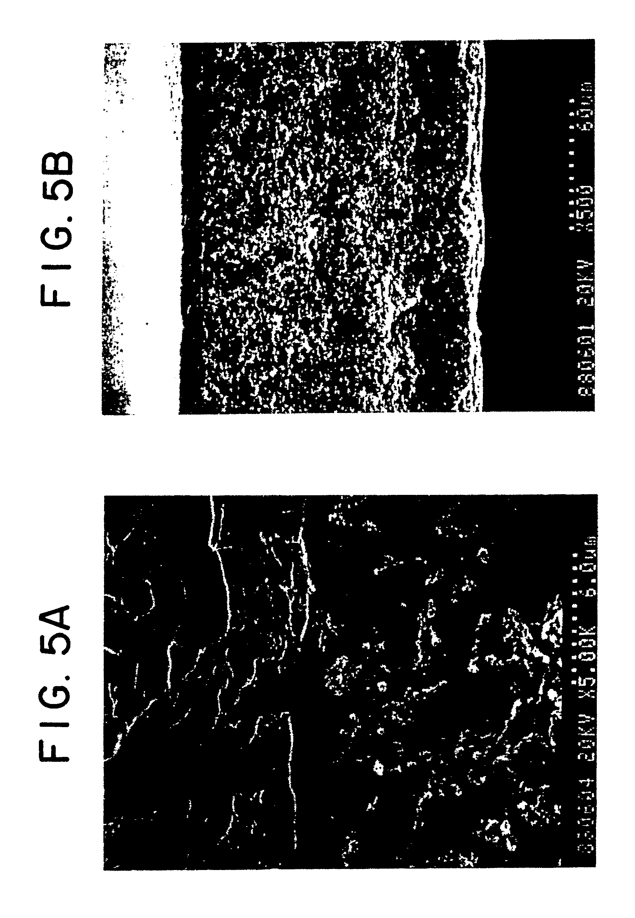

A scanning electron micrograph of a scanned cross section of the polyaniline/polypyrrole electrode obtained in Example 1 described above is shown in Fig. 5. Though this micrograph shows no definite sign of synthesis of polyaniline in the polypyrrole, it evidently shows growth of polyaniline in the manner of filling up the jogging surface of polypyrrole as expected.

Comparative Example 1:
Polyaniline electrode synthesized on Ni foil:
The synthesis of polyaniline was effected by faithfully following the procedure of Example 1, excepting the deposition of a coating of polypyrrole on the Ni foil was omitted. The thickness of the polyaniline film thus obtained was 220 ± 80 $\mu$m as an average of measurements taken at 20 points and the bulk density thereof was 0.23 g/cm$^3$.

A polyaniline cell was produced by using the polyaniline-coated Ni foil as a positive electrode and a lithium foil (0.22 mm in thickness) as a negative electrode. The electrolyte, separator, etc. used in the production of this battery were identical to those used in Example 1.

The charging-discharging cycle was repeated between the marks of 2.5 V and 3.6 V at a fixed current value of 0.1 mA/cm$^2$. In the tenth cycle in which the discharge capacity reached a constant level, the amount of discharge was 114 mAh. This magnitude corresponded to 143 Ah/kg in terms of the weight of polyaniline.

The maximum output density was 7.1 KW/kg when the current was about 0.7 A. In the 10 minutes' boost charging test, the discharge capacity was only 68 mAh at most in the charging at a constant voltage of 3.8 V. This magnitude corresponded to about 60% of the capacity of this cell.

Comparative Experiment 2:
Polyaniline electrode produced by application of pressure
A polyaniline film prodcued by the procedure of Comparative Experiment 1 was compressed with a pressure of 150 kg/cm$^2$ to acquire an increased bulk density. The thickness of the polyaniline film after the compression molding was 75 ± 5 $\mu$m as an average of measurements taken at 20 points and the bulk density was 0.67 g/cm$^3$.

A polyaniline battery was produced by using the polyaniline-coated Ni foil as a positive electrode. The electrolyte, separator, etc. used in the production of this cell were identical to those used in Example 1.

The capacity of this battery was 86 mAh, which corresponded to 108 Ah/kg in terms of the weight of polyaniline. The output density reached its maximum of 4.7 KW/kg at a current value of 0.5 A. The discharge capacity accumulated by the charging at 3.8 V for 10 minutes was 24 mAh (28% of the capacity).

Example 2:

A Ni foil (4.5 cm x 20 cm) 10 $\mu$m in thickness was defatted by ultrasonic washing in a hexane-acetone equivoluminal mixed solvent. In an aqueous solution containing 1.0 mol of sodium p-toluenesulfonate and 2.5 mol of 3-methyl pyrrole each per liter, three such Ni foils were inserted, with the intermediate Ni foil as a positive electrode and the outer Ni foils opposed to each other across the intermediate Ni foil as negative electrodes, and a constant voltage of 2.3 V was applied between the electrodes to synthesize poly-3-methyl pyrrole (the surface area of coating 4.5 cm x 18 cm and the amount of electricity for polymerization 3 coulombs/ cm$^2$). The coating layer thus obtained had a thickness of about 15 $\mu$m. Immediately after the polymerization of poly-3-methyl pyrrole, the Ni foil was immersed in purified water to wash out the polymer liuqid adhering to the polymer surface.

The poly-3-methyl pyrrole-coated Ni foil consequently obtained was immersed in a water-acetonitrile mixed solvent containing 1 mol of benzenesulfonic acid and 0.5 mol of aniline each per liter and the monomer was polymerized by application of a constant voltage of 1.2 V (the surface area of polymerization 4.5 cm x 17.5 cm and the amount of electricity for polymerization 20 coulombs/cm$^2$). Immediately after the polymerization of polyaniline, the Ni foil was immersed in pure methanol to extract the polymer liquid from the polymer layer. The Ni foil was transferred to fresh methanol several times until visible coloration of methanol ceased to occur. Then the Ni foil was dried in a draft and vacuum dried by the use of a vacuum line for 48 hours.

The pllyaniline/poly-3-methyl pyrrole composite film consequently obtained had a thickness of 100 ± 3 $\mu$m and a bulk density of 0.51 g/cm$^2$.

amine polymerized similarly by electrolytic oxidation polymerization as superposed in the form of a coating on said polymer film.

2. A method for the production of an electrically conductive plastic composite member, comprising a step of synthesizing a substituted and/or unsubstituted pyrrole by electrolytic oxidation polymerization on the surface of a positive electrode in the presence of a substituted and/or unsubstituted aromatic sulfonic acid or a salt thereof and a step of synthesizing a saturated and/or unsaturated aromatic amine by electrolytic oxidation on the surface of the resultant polymer of said pyrrole as a positive electrode itself or as part of the positive electrode in the presence of a substituted and/or unsubstituted aromatic sulfonic acid or a salt thereof.

3. A method according to claim 2, wherein the solvent for synthesis of said polymer of pyrrole is water.

4. A method according to claim 2, wherein the solvent for synthesis of said polymer of pyrrole is a mixed solvent of water with an organic solvent.

5. A method according to claim 2, wherein the solvent for synthesis of said polymer of aromatic amine is a mixed solvent of water with an organic solvent.

6. A plastic cell using as an electrode active substance an electrically conductive plastic composite member, comprising a polymer film of a pyrrole synthesized by electrolytic oxidation polymerization and a polymer film of an aromatic amine polymerized similarly by electrolytic oxidation polymerization as superposed in the form of a coating on said polymer film.

**Claims**

1. An electrically conductive plastic composite member, comprising a polymer film of a pyrrole synthesized by electrolytic oxidation polymerization and a polymer film of an aromatic

FIG. 2

FIG. 1

FIG. 3B

FIG. 3A

FIG. 4B

FIG. 4A

FIG. 5B

FIG. 5A

# INTERNATIONAL SEARCH REPORT

International Application No  PCT/JP89/01237

## I. CLASSIFICATION OF SUBJECT MATTER (if several classification symbols apply, indicate all) 6

According to International Patent Classification (IPC) or to both National Classification and IPC

Int. Cl$^5$    B32B27/00, H01M10/40

## II. FIELDS SEARCHED

### Minimum Documentation Searched 7

| Classification System | Classification Symbols |
|---|---|
| IPC | B32B27/00, H01M10/40 |

### Documentation Searched other than Minimum Documentation to the Extent that such Documents are included in the Fields Searched 8

| | |
|---|---|
| Jitsuyo Shinan Koho | 1926 - 1989 |
| Kokai Jitsuyo Shinan Koho | 1971 - 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 62-231747 (The BF Goodrich Company), 12 October 1987 (12. 10. 87) & US, A, 4680236 & EP, A2, 234467 & EP, A3, 234467 | 1, 2 |
| Y | JP, A, 62-207324 (Nippon Soda Co., Ltd.), 11 September 1987 (11. 09. 87), (Family: none) | 1, 2 |

* Special categories of cited documents: 10

"A" document defining the general state of the art which is not considered to be of particular relevance

"E" earlier document but published on or after the International filing date

"L" document which may throw doubts on priority claim(s) or which is cited to establish the publication date of another citation or other special reason (as specified)

"O" document referring to an oral disclosure, use, exhibition or other means

"P" document published prior to the International filing date but later than the priority date claimed

"T" later document published after the International filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 2, 1990 (02. 03. 90) | March 19, 1990 (19. 03. 90) |

| International Searching Authority | Signature of Authorized Officer |
|---|---|
| Japanese Patent Office | |

Form PCT/ISA/210 (second sheet) (January 1985)